# EUROPEAN PATENT APPLICATION

(11) **EP 3 656 998 A1**
(43) Date of publication of application: **27.05.2020**
(21) Application number: 19208210.5
(22) Date of filing: 09.11.2019
(51) Int. Cl.: F02C 7/32, F02K 3/06

(54) **ENGINE ASSEMBLY**

(30) Priority: 20.11.2018 US 201816196357
(71) Applicant: GE Aviation Systems LLC, Grand Rapids, MI 49512 (US)
(72) Inventor: HUANG, Hao, Grand Rapids, Michigan MI49512 (US); WIRSCH Jr., Paul James, Grand Rapids, Michigan MI49512 (US); JIA, Xiaochuan, Grand Rapids, Michigan MI49512 (US)
(74) Representative: Openshaw & Co.

(57) **Abstract**

A turbine engine assembly (10) and power generation system includes a turbofan engine (18), an engine cowling (22) arranged exteriorly to the turbofan engine (18), a set of at least two generators (14) fixed relative to the turbofan engine (18), within the engine cowling (22), and an accessory gear box (12) fixed relative to the turbofan engine (18), within the engine cowling (22), the accessory gear box (12) having a gear train receiving mechanical power from the turbofan engine (18) and delivering the mechanical power to the set of generators (14).

## Description

### TECHNICAL FIELD

The disclosure relates to a turbine engine assembly and generators arranged within an engine cowling.

### BACKGROUND

Contemporary aircraft engines include electric machine assemblies, or generator systems, which utilize a running aircraft engine in a generator mode to provide electrical energy to power systems and components on the aircraft. Some aircraft engines can further include starter/generator (S/G) systems or motor/generator (M/G), which act as a motor to start an aircraft engine from its high pressure spool or a motor to drive the engine from its low pressure spool, and as a generator to provide electrical energy to power systems on the aircraft after the engine is running.

### BRIEF DESCRIPTION

In one aspect, the present disclosure relates to a turbine engine assembly including a turbofan engine, an engine cowling arranged exteriorly to the turbofan engine, a set of at least two generators fixed relative to the turbofan engine, within the engine cowling, and defining a set of generator aeroline dimensions, and an accessory gear box fixed relative to the turbofan engine, within the engine cowling, and defining an accessory gear box aeroline dimension, the accessory gear box having a gear train receiving mechanical power from the turbofan engine and delivering the mechanical power to the set of generators. An aeroline of the engine cowling is limited by one of the set of generator aeroline dimensions or the accessory gear box aeroline dimension.

In another aspect, the present disclosure relates to a power generation system, including a generally cylindrical turbofan engine defining an outer circumference, a generally cylindrical engine cowling arranged radially externally to the turbofan engine, a set of at least two generators fixed relative to the outer circumference of the turbofan engine, housed within the engine cowling, and defining a respective set of generator aeroline dimensions, and an accessory gear box fixed relative to the outer circumference the turbofan engine, housed within the engine cowling, and defining an accessory gear box aeroline dimension, the accessory gear box having a gear train receiving mechanical power from the turbofan engine and delivering the mechanical power to the set of generators to generate electrical power. An aeroline of the engine cowling is limited by one of the set of generator aeroline dimensions or the accessory gear box aeroline dimension.

### BRIEF DESCRIPTION OF THE DRAWINGS

In the drawings:
FIG. 1 is a perspective view of a gas turbine engine having a set of generators located with an engine cowling, in accordance with various aspects described herein.
FIG. 2 is a schematic view of the power system architecture, in accordance with various aspects described herein.

### DETAILED DESCRIPTION

Aspects of the disclosure can be implemented in any environment using an electric generator or motor regardless of whether the electric generator or motor provides a driving force or generates electricity. For purposes of this description, such an electric motor will be generally referred to as an electric machine, electric machine assembly, generator, or similar language, which is meant to clarify that one or more stator/rotor combinations can be included in the machine.

While "a set of' various elements will be described, it will be understood that "a set" can include any number of the respective elements, including only one element. As used herein, the terms "axial" or "axially" refer to a dimension along a longitudinal axis of an electric machine or along a longitudinal axis of a component disposed within the electric machine. As used herein, the terms "radial" or "radially" refer to a dimension extending between a center longitudinal axis of the electric machine, an outer rotational circumference, or a circular or annular component disposed within the electric machine. The use of the terms "proximal" or "proximally," either by themselves or in conjunction with the terms "radial" or "radially," refers to moving in a direction toward the center longitudinal axis, or a component being relatively closer to the center longitudinal axis as compared to another component.

As used herein, a "system" or a "controller module" can include at least one processor and memory. Non-limiting examples of the memory can include Random Access Memory (RAM), Read-Only Memory (ROM), flash memory, or one or more different types of portable electronic memory, such as discs, DVDs, CD-ROMs, etc., or any suitable combination of these types of memory. The processor can be configured to run any suitable programs or executable instructions designed to carry out various methods, functionality, processing tasks, calculations, or the like, to enable or achieve the technical operations or operations described herein. The program can include a computer program product that can include machine-readable media for carrying or having machine-executable instructions or data structures stored thereon. Such machine-readable media can be any available media, which can be accessed by a general purpose or special purpose computer or other machine with a processor. Generally, such a computer program can include routines, programs, objects, components, data structures, algorithms, etc., that have the technical effect of performing particular tasks or implement particular abstract data types.

As used herein, a controllable switching element, such as a switch or contactor, is an electrical device that can be controllable to toggle between a first mode of operation, wherein the switch is "closed" intending to transmit current from a switch input to a switch output, and a second mode of operation, wherein the switch is "open" intending to prevent current from transmitting between the switch input and switch output. In non-limiting examples, connections or disconnections, such as connections enabled or disabled by the controllable switching element, can be selectively configured to provide, enable, disable, or the like, an electrical connection between respective elements.

The disclosure can be implemented in any electrical circuit environment having a switch. A non-limiting example of an electrical circuit environment that can include aspects of the disclosure can include an aircraft power system architecture, which enables production of electrical power from at least one spool of a turbine engine, preferably a gas turbine engine, and delivers the electrical power to a set of electrical loads via at least one solid state switch, such as a solid state power controller (SSPC) switching device. One non-limiting example of the SSPC can include a silicon carbide (SiC) or Gallium Nitride (GaN) based, high power switch. SiC or GaN can be selected based on their solid state material construction, their ability to handle high voltages and large power levels in smaller and lighter form factors, and their high speed switching ability to perform electrical operations very quickly. Additional switching devices or additional silicon-based power switches can be included.

All directional references (e. g. , radial, axial, upper, lower, upward, downward, left, right, lateral, front, back, top, bottom, above, below, vertical, horizontal, clockwise, counterclockwise) are only used for identification purposes to aid the reader's understanding of the disclosure, and do not create limitations, particularly as to the position, orientation, or use thereof. Connection references (e. g., attached, coupled, connected, and joined) are to be construed broadly and can include intermediate members between a collection of elements and relative movement between elements unless otherwise indicated. As such, connection references do not necessarily infer that two elements are directly connected and in fixed relation to each other. The exemplary drawings are for purposes of illustration only and the dimensions, positions, order and relative sizes reflected in the drawings attached hereto can vary.

While this description is primarily directed toward an electric machine providing power generation, it is also applicable to an electric machine providing a driving force or an electric machine providing both a driving force and power generation. Further, while this description is primarily directed toward an aircraft environment or a turbine engine assembly environment, aspects of the disclosure are applicable in any environment using an electric machine. Thus, a brief summary of a contemplated environment should aid in a more complete understanding.

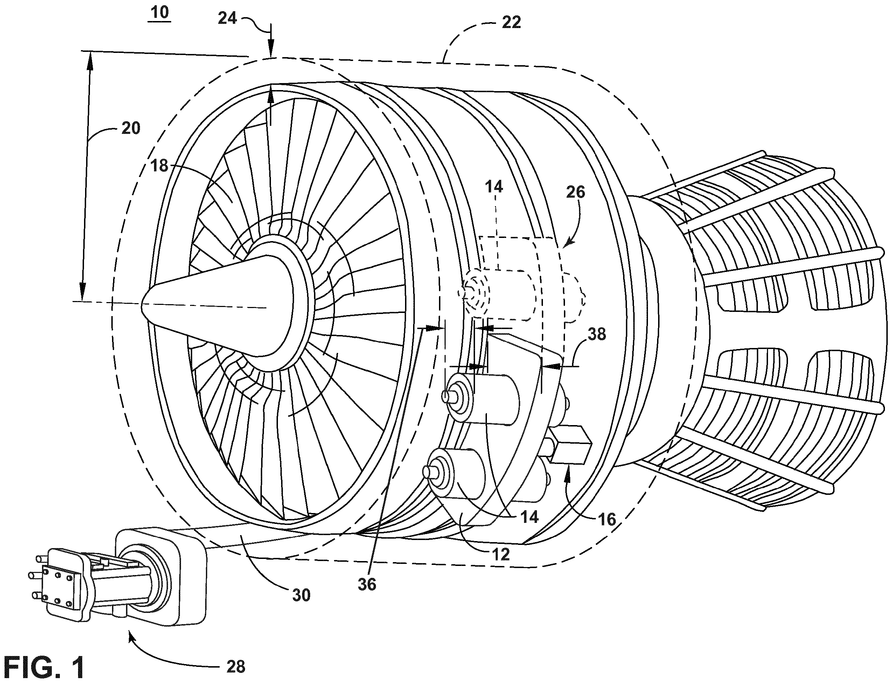

FIG. 1 illustrates a gas turbine engine assembly 10 having a generally cylindrical gas turbine engine 18 having an outer circumference, or outer circumferential surface, an accessory gear box (AGB) 12, and at least one generator 14 mounted to the exterior of the gas turbine engine 18, according to an aspect of the disclosure. The at least one generator 14, the AGB 12, or a combination thereof, can be mounted to the outer circumference or outer circumferential surface of the gas turbine engine 18. As shown, the at least one generator 14 can include a set of generators 14 mechanically connected with the AGB 12. The gas turbine engine 18 can be a turbofan engine, such as a General Electric GEnx or CF6 series engine, commonly used in modern commercial and military aviation or it could be a variety of other known gas turbine engines such as a turboprop or turboshaft. The AGB 12 can be coupled to a turbine shaft (not shown) of the gas turbine engine 18 by way of a mechanical power take off 16. In this sense, the AGB 12 or the mechanical power take off 16 can be mechanically driven by a single shaft or a single mechanical power take off 16 from the gas turbine engine 18. The AGB 12 can further be configured or adapted to deliver the mechanical driving forces from the single shaft or single mechanical power take off 16 to the set of generators 14. For instance, the AGB 12 can include a gear train for receiving the mechanical driving forces or mechanical power from the gas turbine engine 18, and by way of the gear train, deliver the mechanical power to each of the set of generators 14 simultaneously. In non-limiting examples, the gear train or the AGB 12 can be configured, selected, or adapted to maximize the power density for the set of generators 14. In another non-limiting example, maximizing the power density can include including, selecting, or configuring a gear train ratio based on a desired power density for the set of generators 14. The gas turbine engine 18 can be any suitable gas turbine engine used in modern commercial and military aviation or it could be a variety of other known gas turbine engines such as a turboprop or turboshaft. The type and specifics of the gas turbine engine 18 are not germane to the disclosure and will not be described further herein.

Non-limiting examples of the set of generators 14 can include, but are not limited to, any mechanical assemblies that are capable of receiving a mechanical force, such as a rotational kinetic motion on a shaft, and generate electrical power in response to the rotation of the shaft. Thus, the set of generators 14 can include, but are not limited to, and combination of permanent magnet generators, induction machines, synchronous reluctance machines, switched reluctant machines, or the like. Additionally, while the illustrated set of generators 14 are shown substantially similar in size and shape, non-similar generators 14 can be included in the set of generators 14, for example, to provide for varying design considerations such as starter generators or motors, redundancy, reliability, or the like.

Furthermore, as shown, the set of generators 14 can be arranged relative to the AGB 12 to overhang beyond the AGB 12 in both the fore and aft directions, relative to the gas turbine engine 18. In one non-limiting example, the arrangement of the set of generators 14 relative to the AGB 12 (e.g. the overhanging beyond the fore and aft of the AGB 12) can result in, enable, or the like, a shorter bearing span in the generator 14 (the bearing span defined by the rotational supporting of the rotational shaft of the generator 14 between bearing points). A shorter bearing span in the generator 14 or the set of generators 14 can reduce critical speed of the generator 14, can reduce the overhang moment of the generator 14, and the like.

As used herein, the critical speed is the theoretical angular velocity that excites the natural frequency of a rotating object, such as a shaft, propeller, leadscrew, gear, or the like. As the speed of rotation approaches the object's natural frequency, the object begins to resonate, which dramatically increases system vibration. The resulting resonance occurs regardless of orientation. When the rotational speed is equal to the numerical value of the natural vibration, then that speed is referred to as critical speed. The higher the critical speed is, the less risk to have resonances. In aspects of the disclosure, the critical speed of a generator is largely driven by the bearing span. When a generator gets bigger, its bearing span will also get bigger, larger, or longer. Although the shaft will be larger for a larger generator, the chance of lower the critical speed will be higher. Aspects of the disclosure using multiple generators will avoid this point. Also as used herein, the overhung moment can also relate to critical speed and vibration aspects. The higher the overhung moment, the thicker the accessory gear box when the generator mounts will be, resulting in additional weight. The bigger the overhung moment is, the higher chance to have vibration.

Additional generators can be included in aspects of the disclosure. For example, while only two generators 14 are illustrated in the set of generators 14, any number of additional generators 14 can be included and circumferentially arranged about the gas turbine engine 18. As shown in dotted outline 26, a third generator 14 can be included in circumferentially expanded AGB 12, but similar circumferential expansions of the AGB 12 about the gas turbine engine 18 can result in any number of adjacent or spaced generators 14. Furthermore, another generator 28 is shown relative to the lower front portion of the gas turbine engine 18. As shown, the generator 28 can include or be configured to receive mechanical power from a high speed or high pressure spool power take off 30 of the gas turbine engine 18, compared with the set of generators 14, which can be configured to receive a low speed or low pressure spool power take off 16 of the gas turbine engine 16.

The gas turbine engine assembly 10 can further include an engine cowling 22 (schematically illustrated in dotted line) arranged exteriorly to the gas turbine engine 18, or configured, adapted, contoured, shaped, or the like to encase, envelope, house within, encapsulate, or otherwise radially contain at least a portion of the gas turbine engine 18, as well as the AGB 12, the generator 14, and the mechanical power take off 16. In one non-limiting aspect, the engine cowling 18 can further include a portion of a nacelle, and can be shaped, contoured, dimensioned, or otherwise adapted to reduce aerodynamic drag or to improve aerodynamic performance, or to effectively or operably streamline radial aircraft engines. In one non-limiting example, the engine cowling 22 can include an aeroline dimension (hereafter, "cowling aeroline"). In the context used herein, an aeroline dimension is any dimension of a structure that faces an airstream moving over the structure so as to affect drag in the airstream. For example, a surface, a geometric plane or an area intersecting the geometric plane, such as a front-facing or forward-facing contoured fairing (relative to the direction of engine intake or aircraft movement), or the like may define an aeroline dimension. For instance, the gas turbine engine 18, the engine cowling 22, or the like, each include a forward-facing aeroline dimension area defined by the intersection of a plane normal to the centerline of the respective component. In one non-limiting example, an engine aeroline 20 can include a radial dimension of the engine 18, extending from the radial center of the gas turbine engine 18 to the outer radius of the engine cowling 22. In another non-limiting example, a cowling aeroline 24, which can include a portion of the engine aeroline 20, is illustrated as a radial dimension or radial thickness of only the engine cowling 22, extending from an outer radius of the gas turbine engine 18 or an inner radius of the engine cowling 22, to the outer radius of the engine cowling 22. At least one of the cowling aeroline 24, the engine aeroline 20, or the like, can define the engine profile, that is, the profile of the engine, or components there associated with, that is exposed to the airstream during flight of the aircraft.

Regardless of the referential dimension defining the cowling aeroline 24, in one non-limiting instance, the cowling aeroline 24 (or engine cowling 22, itself) can be dimensionally limited by one or more components contained, arranged, fixed, or disposed external to the gas turbine engine 18 and encased or encapsulated by the engine cowling 22, such as the set of generators 14. In this sense, the set of generators 14 can also include an aeroline dimension (hereafter, "generator aeroline"). As shown, a generator dimension or aeroline can include a radial dimension of the generator 14, relative to an axis of rotation of the rotor in the generator 14. For example, the generator dimension or aeroline 36 is illustrated as a radial dimension of the generator 14 extending between a radial center of the generator 14 an outermost radially distal portion of the generator 14. In another non-limiting example, the generator aeroline can alternatively include a diameter dimension of the generator 14 extending between the opposing furthest radially distal portions of the generator 14, in the radial direction originating from the radial center of the gas turbine engine 18 and passing through the radial center of the generator 14. Thus, the set of generators can each include a forward-facing aeroline dimension area defined by the intersection of a plane normal to the centerline of the respective generator 14. In another non-limiting example, the cowling aeroline 24 can be dimensionally limited by, for instance, an AGB dimension or aeroline 38 defined by a radial dimension of the AGB 12 extending between the opposing furthest radially distal portions of the AGB 12, in the radial direction originating from the radial center of the gas turbine engine 18 and passing through the AGB 12.

While the term "aeroline" is used to describe the generator 14 aeroline and AGB 12 aeroline, it will be understood that neither the generator 14 nor the AGB 12 is directly exposed to an airstream during flight operations, and the "aeroline" refers to the dimensional characteristics of the generator 14 or AGB 12, respectively, not direct airstream-interactive characteristics. Regardless of the referential dimension defining the generator aeroline 36 or AGB aeroline 38, in one non-limiting instance, the cowling aeroline 24 can be dimensionally limited by the generator aeroline 36, the AGB aeroline 38, or a combination thereof.

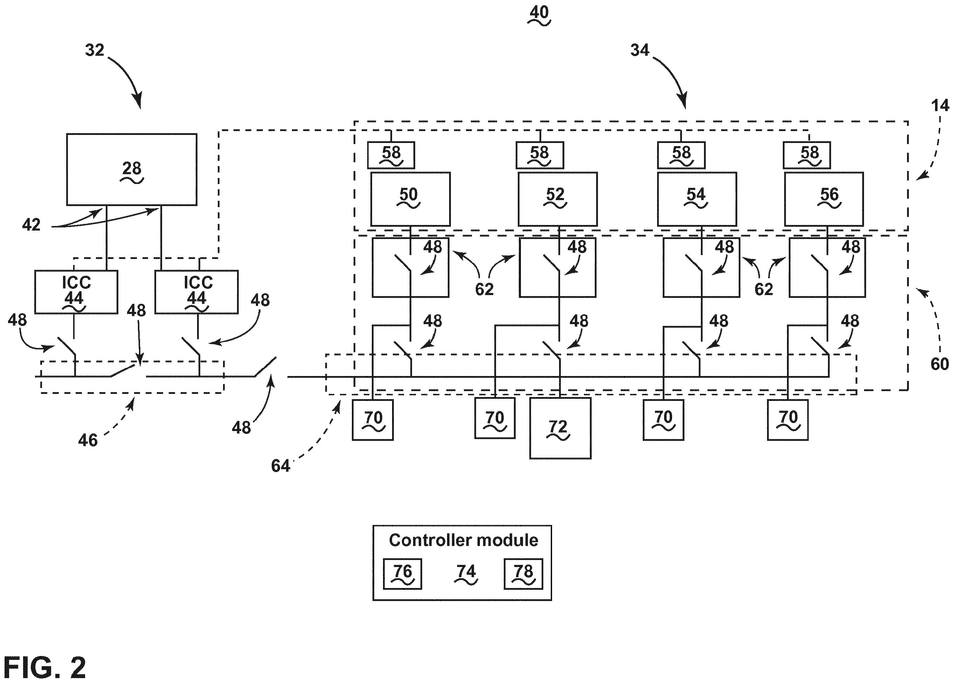

FIG. 2 illustrates a schematic view of a power system architecture 40 or power generation system, in accordance with aspects of the gas turbine engine assembly 10 shown in FIG. 1. For example, as shown in FIG. 2, the power system architecture 40 can include a first power system 32 including the generator 28 having set of power outputs 42, for example when the generator 28 includes multiple sets of power-generating windings, each power output 42 of which is connected with an integrated converter controller (ICC) 44, which can further be selectively connected with a first power distribution bus 46 by way of contactors 48. As used herein, contactors 48 can include any controllably operable device or mechanism to enable or disable an electrical connection between respective conducting components or elements. Non-limiting examples of contactors 48 can include electro-mechanical devices or solid state devices, such as solid state power controllers.

The power system architecture 40 can further include a second power system 34 including the set of generators 14 electrically arranged in parallel with each other. The non-limiting example illustration of FIG. 2 shows a first generator 50, a second generator 52, a third generator 54, and a fourth generator 56. The set of generators 14 can further be connected with a set of power distribution connections 60. For example, each of the set of generators 14 is shown having a respective selectively operable power output contactor 62 (shown schematically having individual contactors 48) that are operable to connect the power output or power supply generated by each respective generator 50, 52, 54, 56, or a subset of the generators 14, to, for example, a second power bus 64, or to a respective set of power-consuming electrical loads 70, 72 selectively connected with the respective generators 50, 52, 54, 56 by way of the power output contactors 62 or other contactors 48. Furthermore, in another non-limiting aspect of the disclosure, the first power bus 46 and the second power bus 64 can be selectively connected, coupled, or tied to each other by a contactor 48.

In one illustrated example, the second generator 52 can be operably connectable with a first representative electrical load 70 by way of the power output contactor 62, and can be operably connectable with the second power bus 64 by way of another contactor 48, which is further adapted to power a second representative electrical load 72. In this example, the second power system 34 can provide some redundancy in supplying power to the second power bus 64, as each of the set of generators 14, or a subset thereof, can operably supply power to the second power bus 64 to, for example, energize the second electrical load 72. In this sense, aspects of the second electrical load 72 can be included wherein, for example, no single generator 50, 52, 54, 56 could energize the second electrical load 72, and thus, at least two (or more) generators 50, 52, 54, 56 can be selective connected by way of respective power output contactors 62 and other contactors 48 to energize the second electrical load 72.

In the illustrated example, the generator 28 can be adapted or configured to generate alternating current (AC) power, which can then be converted or rectified to direct current (DC) power by the respective ICC 44. In one non-limiting example, the set of generators 14 can also be adapted or configured to generate AC power, which can be converted or rectified to DC power by respective ICC components, not illustrated for brevity. In this sense, the set of first and second power buses 46, 64 can be DC power distribution buses. While a DC voltage system is described, aspects of the disclosure can be equally applicable to AC voltage systems, buses, generators, or the like. In one non-limiting aspect of the disclosure, the power distribution buses 46, 64 can be configured to provide, for instance 28 VDC, 270 VDC, 610 VDC, megawatt capable power buses, or any other higher or lower voltages.

The power distribution system 40 can further include a control and communication system. For example, the control and communication system can include a respective generator control unit (GCU) 58 for each of the set of generators 14. The GCU 58 can operably control the power generation and supply of the respectively connected generator 50, 52, 54, 56. The set of GCUs 58 can further be communicatively connected with the ICCs 44 of the first power system 32 by way of communication connections. Additionally, a power system controller module 74 having a processor 76 and memory 78 can be included in the power distribution system 40 to manage, control, instruct, or otherwise provide communication and operational signals for any number of the power distributions system 40 components, including but not limited to, the set of contactors 48, the power output contactors 62, the ICCs 44, or the GCUs 58.

In another non-limiting example, the power distributions system 40 can allow for or enable the selective connecting of power supplies from the set or subset of generators 14 to the set of electrical loads 70, 72 based on, for example, a power demanded by the set of electrical loads. Aircraft electrification is increasing demanding higher electrical power extraction from the gas turbine engine assemblies 10, including but not limited to megawatt power demands, or even several ten megawatt power demands. By enabling the inclusion of a set of generators 14 on the gas turbine engine assembly 10, higher power outputs can be enabled to meet the power demands of such systems, including but not limited to a combinable power output of the set of generators 14 of at least one megawatt. Furthermore, by limiting the generator aeroline 36 or the AGB aeroline 38, such systems can further limit the cowling aeroline 24 or engine aeroline 20 necessary to enable the power distribution system 40 power sources. By reducing or limiting the cowling aeroline 24 or the engine aeroline 20, the gas turbine engine assembly 10 can reduce or limit the interaction assembly 10 in the airstream of a flying aircraft, and thus reduce or limit drag on the assembly 10. Reducing or limiting drag on the gas turbine engine assembly 10 can improve fuel burn efficiency and increase the flight range of the aircraft.

The aspects disclosed herein provide an engine assembly having a set of generators for operating a power distribution system enabled to a power supply to meet a power demand for an aircraft. As used herein, meeting the power demand can include meeting an expected or designed power demand for the power distribution system, as well as providing back-up or redundant power supplies in the event of failure of a primary power supply. The technical effect is that the above described aspects enable the operating of the power distribution system as well as the selective enabling or conducting, or disabling or disconnecting various power supplies from various power buses. One advantage that can be realized in the above aspects is that the above described aspects provide a robust power system architecture enabled to allow redundant, replacement, or supplemental power to be supplied to various power buses of an aircraft, for example, in the event of failure of a primary power supply, or in response to changing power demands of the aircraft during nominal operations.

Another advantage of the described aspects enable or allow for the design of a power distribution system by including modular power generating systems that do not modify the engine profile, the cowling aeroline 24 or the engine aeroline 20 of the gas turbine engine assembly 10. For instance, including additional parallel-arranged generators 14 in the set of generators 14 (or the corresponding AGB 12 to fit the same) when the maximum cowling aeroline 24 or engine aeroline 20 will not alter the respective aeroline, while including additional power capabilities. Furthermore, by selecting an increased number of smaller-aeroline generators 14 to keep the engine profile, the cowling aeroline 24 or engine aeroline 20 limited, the same amount of power generation can be achieved while reducing drag, compared with fewer larger generators. Additionally, smaller aeroline generators 14 can result in lower development cost and quicker to market conditions due to known technologies and efficiencies associated with smaller generators overall.

Furthermore, as described, by arranging the set of generators 14 to overhang beyond the fore and aft of the AGB 12, shortening the bearing span in the generator 14, can reduce critical speed of the generator 14, can reduce the overhang moment of the generator 14.

Many other possible aspects and configurations in addition to that shown in the above figures are contemplated by the present disclosure. For example, non-limiting aspects of the disclosure can be included wherein the engine 18 can be started by the generator 28 receiving mechanical power form the high pressure spool of the power take off 30, while the set of generators 14 receiving mechanical power from the low pressure spool power take off 16 can electrically drive or energize other elements, such as a fan or propulsion devices (e.g. schematically represented as a load 70). In yet another non-limiting example, the load 70 can include an ICC configured or adapted to drive a low spool device, such as a fan. In another non-limiting example, the set of generators 14 can be utilize to electrically drive or energize other elements, such as a fan or propulsion devices during taxi operations on the ground. Additionally, the design and placement of the various components, or coolant flows therebetween, can be rearranged such that a number of different in-line configurations could be realized.

To the extent not already described, the different features and structures of the various aspects can be used in combination with others as desired. That one feature cannot be illustrated in some of the aspects is not meant to be construed that it cannot be, but is done for brevity of description. Thus, the various features of the different aspects can be mixed and matched as desired to form new aspects, whether or not the new aspects are expressly described.

This written description uses examples to disclose aspects of the disclosure, including the best mode, and also to enable any person skilled in the art to practice the disclosure, including making and using any devices or systems and performing any incorporated methods. The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the invention are provided by the subject matter of the following clauses:
1. A turbine engine assembly comprising a turbofan engine, an engine cowling arranged exteriorly to the turbofan engine, a set of at least two generators fixed relative to the turbofan engine, within the engine cowling, and defining a set of generator aeroline dimensions, and an accessory gear box fixed relative to the turbofan engine, within the engine cowling, and defining an accessory gear box aeroline dimension, the accessory gear box having a gear train receiving mechanical power from the turbofan engine and delivering the mechanical power to the set of generators, wherein an aeroline of the engine cowling is limited by one of the set of generator aeroline dimensions or the accessory gear box aeroline dimension.
2. The turbine engine assembly of any preceding clause wherein the set of generator aeroline dimensions are defined by a radial dimension extending between a centerline of the generator and the most distal portion of a respective generator housing.
3. The turbine engine assembly of any preceding clause wherein the set of generator aeroline dimensions are defined in a radial dimension extending between outermost radially distal portions of a respective generator housing.
4. The turbine engine assembly of any preceding clause wherein the set of generator aeroline dimensions are defined in a radial direction originating from the radial center of the turbofan engine and passing through the radial center of the respective generator, to a most radially distal portion of the respective generator.
5. The turbine engine assembly of any preceding clause wherein the accessory gear box aeroline dimension is defined by a radial dimension of the accessory gear box extending between the opposing furthest radially distal portions of the accessory gear box, in a radial direction originating from a radial center of the turbofan engine and passing through the accessory gear box.
6. The turbine engine assembly of any preceding clause wherein the set of generators each include a forward-facing aeroline dimension area defined by the intersection of a plane normal to the centerline of the respective generator.
7. The turbine engine assembly of any preceding clause wherein the aeroline dimension of the generator is defined by a diameter dimension extending between opposing radially distal portions of the generator housing.
8. The turbine engine assembly of any preceding clause wherein a combinable power output of the set of generators is at least one megawatt.
9. The turbine engine assembly of any preceding clause wherein the set of generators are arranged relative to the accessory gear box to overhang beyond the fore and aft of the accessory gear box.
10. The turbine engine assembly of any preceding clause wherein the arrangement of the set of generators relative to the accessory gear box reduces the overhang moment of the set of generators.
11. The turbine engine assembly of any preceding clause wherein the arrangement of the set of generators relative to the accessory gear box reduces the critical speed of the set of generators.
12. The turbine engine assembly of any preceding clause wherein the gear train includes a gear ratio based on a desired power density of the set of generators.
13. The turbine engine assembly of any preceding clause wherein each of the set of generators and the accessory gear box are circumferentially arranged about the turbofan engine.
14. The turbine engine assembly of any preceding clause wherein the accessory gear box receives mechanical power from a low speed spool of the turbofan engine.
15. A power generation system comprising a generally cylindrical turbofan engine defining an outer circumference, a generally cylindrical engine cowling arranged radially externally to the turbofan engine, a set of at least two generators fixed relative to the outer circumference of the turbofan engine, housed within the engine cowling, and defining a respective set of generator aeroline dimensions, and an accessory gear box fixed relative to the outer circumference the turbofan engine, housed within the engine cowling, and defining an accessory gear box aeroline dimension, the accessory gear box having a gear train receiving mechanical power from the turbofan engine and delivering the mechanical power to the set of generators to generate electrical power, wherein an aeroline of the engine cowling is limited by one of the set of generator aeroline dimensions or the accessory gear box aeroline dimension.
16. The power generation system of any preceding clause wherein the set of generator aeroline dimensions are defined by a radial dimension extending between a centerline of the generator and the most distal portion of a respective generator housing.
17. The power generation system of any preceding clause wherein the set of generator aeroline dimensions are defined in a radial dimension extending between outermost radially distal portions of a respective generator housing.
18. The power generation system of any preceding clause wherein the set of generator aeroline dimensions are defined in a radial direction originating from the radial center of the turbofan engine and passing through the radial center of the respective generator, to a most radially distal portion of the respective generator.
19. The power generation system of any preceding clause wherein the accessory gear box aeroline dimension is defined by a radial dimension of the accessory gear box extending between the opposing furthest radially distal portions of the accessory gear box, in a radial direction originating from a radial center of the turbofan engine and passing through the accessory gear box.
20. The power generation system of any preceding clause wherein the set of at least two generators supply electrical power to energize an integrated converter controller (ICC) low spool drive.

## Claims

1. A turbine engine assembly (10) comprising:
a turbofan engine (18);
an engine cowling (22) arranged exteriorly to the turbofan engine (18);
a set of at least two generators (14) fixed relative to the turbofan engine (18), within the engine cowling (22), and defining a set of generator aeroline dimensions (36); and
an accessory gear box (12) fixed relative to the turbofan engine (18), within the engine cowling (22), and defining an accessory gear box aeroline dimension (38), the accessory gear box (12) having a gear train receiving mechanical power from the turbofan engine (18) and delivering the mechanical power to the set of generators (14);
wherein an aeroline (24) of the engine cowling (22) is limited by one of the set of generator aeroline dimensions (36) or the accessory gear box aeroline dimension (38).

2. The turbine engine assembly (10) of claim 1 wherein the set of generator aeroline dimensions (36) are defined by a radial dimension extending between a centerline of the generator (14) and the most distal portion of a respective generator housing.

3. The turbine engine assembly (10) of claim 1 or 2, wherein the set of generator aeroline dimensions (36) are defined in a radial dimension extending between outermost radially distal portions of a respective generator housing.

4. The turbine engine assembly (10) of any of claims 1 to 3, wherein the set of generator aeroline dimensions (36) are defined in a radial direction originating from the radial center of the turbofan engine (18) and passing through the radial center of the respective generator (14), to a most radially distal portion of the respective generator (14).

5. The turbine engine assembly (10) of any of claims 1 to 4, wherein the accessory gear box aeroline dimension (38) is defined by a radial dimension of the accessory gear box (12) extending between the opposing furthest radially distal portions of the accessory gear box (12), in a radial direction originating from a radial center of the turbofan engine (18) and passing through the accessory gear box (12).

6. The turbine engine assembly (10) of any of claims 1 to 5, wherein the set of generators (14) each include a forward-facing aeroline dimension area defined by the intersection of a plane normal to the centerline of the respective generator (14).

7. The turbine engine assembly (10) of any of claims 1 to 6, wherein the set of generators (14) are arranged relative to the accessory gear box (12) to overhang beyond the fore and aft of the accessory gear box (12).

8. The turbine engine assembly (10) of claim 9 wherein the arrangement of the set of generators (14) relative to the accessory gear box (12) reduces the overhang moment of the set of generators (14).

9. The turbine engine assembly (10) of claim 9 or 10, wherein the arrangement of the set of generators (14) relative to the accessory gear box (12) reduces the critical speed of the set of generators (14).

10. A power generation system comprising:
a generally cylindrical turbofan engine (18) defining an outer circumference;
a generally cylindrical engine cowling (22) arranged radially externally to the turbofan engine (18);
a set of at least two generators (14) fixed relative to the outer circumference of the turbofan engine (18), housed within the engine cowling (22), and defining a respective set of generator aeroline dimensions (36); and
an accessory gear box (12) fixed relative to the outer circumference the turbofan engine (18), housed within the engine cowling (22), and defining an accessory gear box aeroline dimension (38), the accessory gear box (12) having a gear train receiving mechanical power from the turbofan engine (18) and delivering the mechanical power to the set of generators (14) to generate electrical power;
wherein an aeroline (24) of the engine cowling (22) is limited by one of the set of generator aeroline dimensions (36) or the accessory gear box aeroline dimension (38).

11. The power generation system of claim 10 wherein the set of generator aeroline dimensions (36) are defined by a radial dimension extending between a centerline of the generator (14) and the most distal portion of a respective generator housing.

12. The power generation system of claim 10 or 11 wherein the set of generator aeroline dimensions (36) are defined in a radial dimension extending between outermost radially distal portions of a respective generator housing.

13. The power generation system of any of claims 10 to 12 wherein the set of generator aeroline dimensions (36) are defined in a radial direction originating from the radial center of the turbofan engine (18) and passing through the radial center of the respective generator (14), to a most radially distal portion of the respective generator (14).

14. The power generation system of any of claims 10 to 13 wherein the accessory gear box aeroline dimension (38) is defined by a radial dimension of the accessory gear box (12) extending between the opposing furthest radially distal portions of the accessory gear box (12), in a radial direction originating from a radial center of the turbofan engine (18) and passing through the accessory gear box (12).

15. The power generation system of any of claims 10 to 14 wherein the set of at least two generators (14) supply electrical power to energize an integrated converter controller, ICC, low spool drive.
